# EUROPÄISCHE PATENTANMELDUNG

(11) **EP 1 151 706 A1**
(43) Veröffentlichungstag der Anmeldung: **07.11.2001**
(21) Anmeldenummer: 01110395.9
(22) Anmeldetag: 26.04.2001
(51) Int. Cl.: A47J 31/44, A47J 37/08, A47J 19/00, A47J 29/00

(54) **Kuchengerät**

(30) Priorität: 02.05.2000 ES 200001170
(71) Anmelder: BSH Comercial Ufesa, S.A., 01013 Vitoria (ES)
(72) Erfinder: Estirado, Felix, 01003 Vitoria (ES)
(74) Vertreter: Thoma, Lorenz

(57) **Zusammenfassung**

Ein Küchengerät mit einer ersten Vorrichtung für die unversetzbare mechanische Verbindung (3, 4) in mindestens einer Richtung mit mindestens einem weiteren Küchengerät einer Reihe von Küchengeräten und/oder einer zweiten Vorrichtung für die elektrische Verbindung (6) mit mindestens einem weiteren Küchengerät der Reihe von Küchengeräten (1).

## Beschreibung

### GEBIET DER ERFINDUNG

Die Erfindung betrifft ein Küchengerät und vorzugsweise ein kleines Elektro-Haushaltsgerät, wie zum Beispiel Entsafter, Kaffeemaschinen, Toaster, Mixer usw.

### STAND DER TECHNIK

Vom Gebrauchsmuster DE 297 18 161 U1 ist eine Kombination von kleinen Küchenapparaten bekannt, die an ein Schaltgestell angeschlossen sind. Dieses Schaltgestell verfügt über den Anschluß an das Stromnetz, und an einen Teil davon sind die Apparate angeschlossen, um vom Stromnetz gespeist zu werden.

Dieses System der Kombination von Apparaten läßt es nicht zu, dieselben unabhängig zu verwenden, und es wird ein zusätzliches Element, wie das Schaltgestell, benötigt, durch das die Elektro-Haushaltsgeräte an das Stromnetz angeschlossen und gleichzeitig geordnet werden.

### AUFGABE DER ERFINDUNG

Die Aufgabe der Erfindung ist es, Küchengeräte, vorzugsweise kleine Elektro-Haushaltsgeräte, zu verbessern, um ihnen größere Unabhängigkeit zu verleihen und gleichzeitig den Raum, den sie einnehmen, auf ein Minimum herabsetzen zu können.

### BESCHREIBUNG DER ERFINDUNG

Diese Aufgabe wird gemäß der Erfindung mit einer ersten Vorrichtung für die unversetzbare mechanische Verbindung in mindestens einer Richtung mit mindestens einem weiteren Küchengerät einer Reihe von Küchengeräten und/oder einer zweiten Vorrichtung für die elektrische Verbindung mit mindestens einem weiteren Küchengerät der Reihe von Küchengeräten bewerkstelligt.

Auf diese Weise können Küchengeräte zu ihrer besseren Aufbewahrung versetzbar oder ortsfest mechanisch verbunden werden, sei es in Turmform gestapelt, nebeneinander oder auf irgendeine Weise, wodurch der Raum, den sie einnehmen, beträchtlich verringert wird. Die mechanische Verbindung kann auch irgendeine Art der Zusammenfügung der Geräte sein, wie zum Beispiel mit Klebe-, Haft- (in der Art von Velcro® ), magnetischen usw. Materialien. Neben der mechanischen Verbindung kann auch eine elektrische Verbindung zwischen ihnen vorhanden sein, damit diejenigen, die diese benötigen, funktionieren können, wenn sie erst einmal gestapelt sind, wobei diese elektrische Verbindung zum Beispiel als mechanische Verbindung dient oder die elektrische Verbindung, ohne daß sie mechanisch verbunden sind, zum Beispiel als Verlängerung zu einer einzigen Stromanschlußstelle dient, wobei ein Gerät ohne Notwendigkeit von mehr Steckern als dem von einem von ihnen an das andere angehängt wird. Falls nötig, können sie auch einzeln an die Stromanschlußstelle angeschlossen werden, ohne daß sie unbedingt mit einem anderen Gerät der Reihe mechanisch oder elektrisch verbunden zu werden, wodurch sie völlig unabhängig voneinander sind.

Für die elektrische Verbindung der Geräte kann die zweite Vorrichtung mindestens eine Verbindung für die Stromversorgung eines weiteren Küchengeräts der Reihe umfassen.

Dadurch eröffnet sich die Möglichkeit, daß die Küchengeräte der Reihe nicht ausschließlich auf kleine Elektro-Haushaltsapparate beschränkt sind, da bei der Verbindung zwischen zwei elektrischen Apparaten oder eines Apparats mit dem Stromnetz mindestens ein weiteres Gerät vorhanden sein kann, das nicht mit elektrischer Energie funktioniert und das die Verbindung und den Stromdurchfluß durch ein elektrisches System erlaubt, das zu diesem Zweck ausgeführt wurde, so daß alle Arten von Apparaten, unabhängig davon, ob sie elektrisch sind oder nicht, angeschlossen werden können.

Es ist auch möglich, daß die erste Vorrichtung eine Blockiervorrichtung ist.

Auf diese Weise ist das Küchengerät ein kompakter Apparat, in dem die Funktionen der Geräte, aus denen er sich zusammensetzt, eingegliedert sind, wobei mehrere dieser Funktionen gleichzeitig verwendet werden können, und zwar mit der Bequemlichkeit, die bedeutet, alles in einem Apparat zur Verfügung zu haben.

Eine andere Art und Weise, die Erfindung auszuführen, ist, daß zumindest ein Abschnitt des Gehäuses des Apparates nicht ebenflächig ist und durch geometrische Zusammenfügung mit einem entsprechenden Abschnitt des Gehäuses eines anderen Küchengeräts der Reihe verbunden werden kann.

Auf diese Weise kann die mechanische Verbindung der Geräte ausgeführt werden, indem die geometrischen Formen, die ihre Seitenwände aufweisen, ineinanderpassen, handle es dabei sich nun um Führungen, die sich in einer Richtung verschieben, Wellen auf der Oberfläche, Klammern, Gewinde oder sonst irgendeine Art mechanischer Befestigung, bei der die Ausbildung bestimmend ist. Außerdem kann solch eine Art der Verbindung genutzt werden, um dem Apparat eine besondere Ästhetik zu verleihen. Werden zum Beispiel Ausbildungen eines Küchengeräts in Form von Beinen in Aufnahmen dafür in einem anderen Küchengerät eingepaßt, können diese Aufnahmen mit Stöpseln verschlossen werden, wenn die Geräte getrennt werden oder sofern sie nicht verbunden sind.

Für die Ausführung der Erfindung kann auch veranlaßt werden, daß die zweite Vorrichtung mindestens eine Verbindung für die Übertragung von Steuerdaten an ein anderes Küchengerät der Reihe umfaßt.

Mit einer Verbindungsvorrichtung zwischen den Geräten, wie einer Verdrahtung für die Datenübertragung, können sämtliche Küchengeräte gesteuert werden, die ausgehend von einem einzigen Küchengerät, das die Zentralsteuerung aufweist, untereinander zusammengeschaltet sind oder die, wenn alle eine Generalsteuerung für die restlichen Küchengeräte aufweisen, ausgehend von irgendeinem Küchengerät mit den restlichen zusammengeschaltet sind.

Außerdem können die Steuerdaten über die Verbindung für die Stromversorgung übertragen werden.

Durch Konfigurieren der Datenübertragung derart, daß mit einem kleinen Transformator Wellen mit einer Frequenz gesendet werden, die genügend hoch ist, um Verzerrungen und Störungen durch die Wirkung der Harmonischen über das Stromnetz zu vermeiden, können dieselben von einem Küchengerät, in dem die Steuerung ist, auf ein anderes Gerät, das sie verarbeitet, übertragen werden.

Die Erfindung berücksichtigt auch, daß ein Küchengerät eine Vorrichtung zur Steuerung von mindestens einem weiteren Küchengerät der Reihe, das an das Küchengerät angeschlossen ist, umfaßt.

Ein Küchengerät kann die Betriebszentrale einer Gruppe von Küchengeräten sein und infolgedessen eine Steuerung aufweisen, wie zum Beispiel eine Uhr, eine Fernsteuerung oder von irgendeiner anderen Art, die an jedes andere Küchengerät, das an dieses angeschlossen ist, Daten senden kann, wie zum Beispiel den Zeitpunkt der Ingangsetzung, den Zeitpunkt des Anhaltens, Betriebstemperaturen usw.

### KURZE BESCHREIBUNG DER ZEICHNUNGEN

Um die Beschreibung der Erfindung zu vervollständigen, werden einige Figuren beigebracht, um dieselbe besser verständlich zu machen:

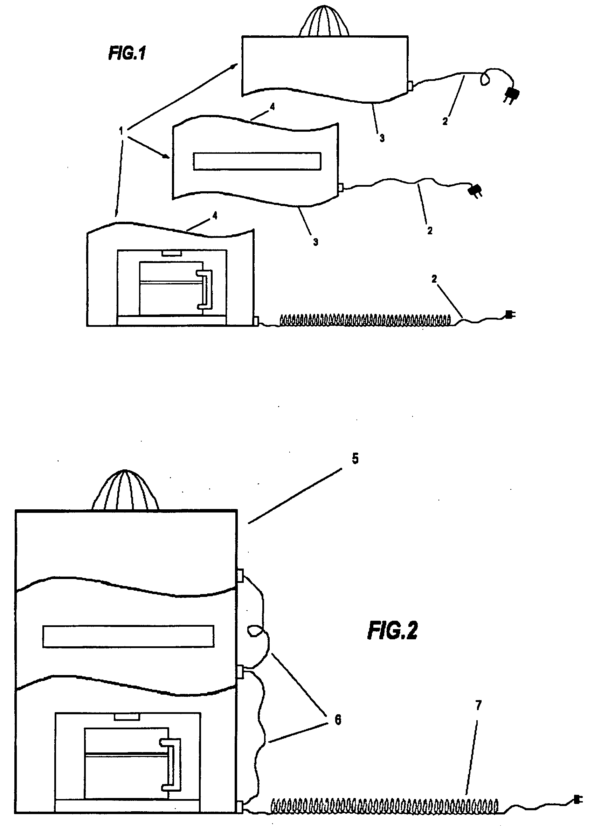

Figur 1 stellt eine Reihe kleiner Elektro-Haushaltsgeräte mit ihrem Kabel für den unabhängigen Anschluß an das Stromnetz dar.
Figur 2 stellt einen Turm kleiner Elektro-Haushaltsgeräte dar, die untereinander zusammengeschaltet sind, während nur eines von ihnen direkt an das Stromnetz angeschlossen ist und die elektrische Energie den restlichen Apparaten zuführt.

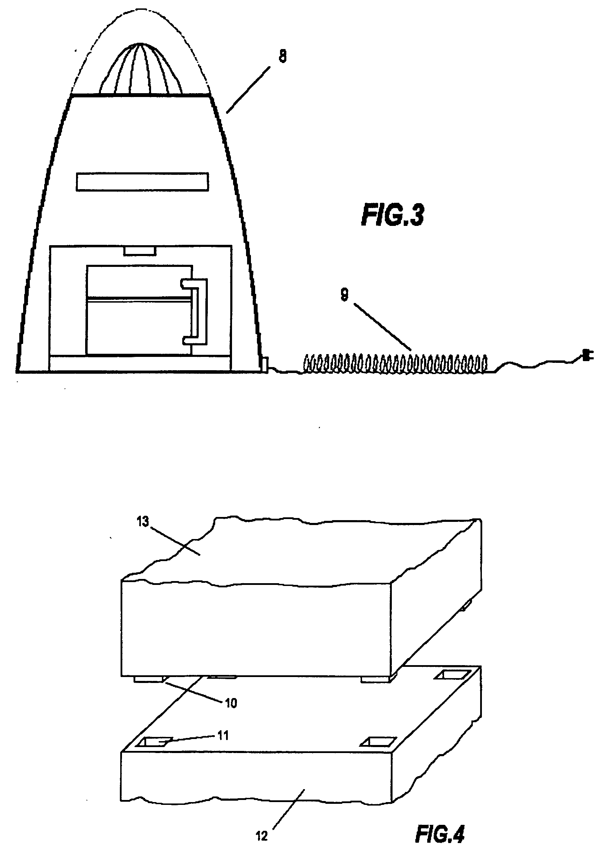

Figur 3. Der Turm der Elektro-Haushaltsgeräte ist ein kompakter Turm mit einem einzigen Anschluß an das Stromnetz und einer internen Stromversorgung für jedes Elektro-Haushaltsgerät.
Figur 4 zeigt eine perspektivische Ansicht einer Einzelheit der feder- und nutartigen, mechanischen Zusammenfügung zweier Küchengeräte in Turmform. Von einem davon, dem oberen, ist die untere Fläche mit Beinen dargestellt, die in den oberen Teil des anderen Küchengeräts, das unten angeordnet ist und eine Ausbildung dafür aufweist, hineinpassen.

### BESCHREIBUNG EINES BEVORZUGTEN AUSFÜHRUNGSBEISPIELS

Im Anschluß erfolgt eine Beschreibung der Erfindung, die auf den zuvor besprochenen Figuren beruht.

Normalerweise stellt sich in einer Küche das Problem, daß die Arbeitsplatte über wenig Platz verfügt, wenn es darum geht, alle kleinen Küchenapparate 1 des täglichen Gebrauchs, wie kleine Elektro-Haushaltsgeräte oder die mechanischen Küchenapparate, aufzustellen, was auch beim Aufbewahren derselben in einem Schrank zutrifft.

Ein bevorzugtes Ausführungsbeispiel ist eine Baugruppe von drei Elektro-Haushaltsgeräten, wobei eine Kaffeemaschine im Unterbau, sowie ein Toaster und ein Entsafter im oberen Teil einen Turm mit einem einzigen Anschluß 7 an das Stromnetz, wenn sie auf diese Weise zusammengebaut sind, bilden. Dieser Anschluß speist die drei Elektro-Haushaltsgeräte, da sie untereinander zusammengeschaltet 6 sind.

Jedes der Elektro-Haushaltsgeräte 1 des Turms 5 kann unabhängig verwendet werden, sei es, daß eines über dem anderen aufgebaut ist, so daß sie ineinanderpassen und die elektrische Zusammenschaltung 6 erfolgt, oder sei es, daß sie vom Turm 5 getrennt sind und jedes mit seinem Einzelanschluß 2 an das Stromnetz angeschlossen wird. Das Zuführungskabel zum Stromnetz kann vom Elektro-Haushaltsgerät zur Verwahrung auch abgenommen werden, wenn es nicht verwendet wird.

Der Turm wird derart gebildet, daß die obere Wand 4 eines der Geräte mit der unteren Wand 3 eines anderen durch geometrische Zusammenfügung zusammenpaßt, wobei im unterem Teil gleichzeitig Füße 10 vorgesehen sind, um die Stabilität zu erhöhen. Diese Füße 10 passen ihrerseits in offene Löcher 11 im oberen Teil des anliegenden Geräts. Werden die Geräte voneinander getrennt und unabhängig voneinander verwendet, können die Löcher mit Stöpseln, die in diese hineinpassen, verschlossen werden.

## Patentansprüche

1. Küchengerät mit einer ersten Vorrichtung für die unversetzbare mechanische Verbindung (3, 4) in mindestens einer Richtung mit mindestens einem weiteren Küchengerät einer Reihe von Küchengeräten und/oder einer zweiten Vorrichtung für die elektrische Verbindung (6) mit mindestens einem weiteren Küchengerät der Reihe von Küchengeräten (1).

2. Küchengerät nach Anspruch 1, **dadurch gekennzeichnet, daß** die erste Vorrichtung eine Blockiervorrichtung ist.

3. Küchengerät nach Anspruch 1, **dadurch gekennzeichnet, daß** zumindest ein Abschnitt seines Gehäuses nicht ebenflächig (4) ist und durch geometrische Zusammenfügung mit einem entsprechenden Abschnitt (3) des Gehäuses eines anderen Küchengeräts der Reihe (1) verbunden werden kann.

4. Küchengerät nach Anspruch 3, **gekennzeichnet durch** mindestens einen Fuß (10) und/oder mindestens einer Ausbildung (11), um mit einem Fuß (10) eines anderen Küchengeräts der Reihe (1) einzugreifen.

5. Küchengerät nach irgendeinem der Ansprüche 1 bis 4, **dadurch gekennzeichnet, daß** die zweite Vorrichtung mindestens eine Verbindung für die Stromversorgung (6) eines anderen Küchengeräts der Reihe (1) umfaßt.

6. Küchengerät nach irgendeinem der Ansprüche 1 bis 5, **dadurch gekennzeichnet, daß** die zweite Vorrichtung mindestens eine Verbindung für die Übertragung von Steuerdaten an ein anderes Küchengerät der Reihe (1) umfaßt.

7. Küchengerät nach Anspruch 5 und 6, **dadurch gekennzeichnet, daß** die Steuerdaten über die Verbindung für die Stromversorgung (6) übertragen werden können.

8. Küchengerät nach Anspruch 6 oder 7, **dadurch gekennzeichnet, daß** es eine Vorrichtung für die Steuerung von mindestens einem weiteren Küchengerät der Reihe (1), das an das Küchengerät angeschlossen ist, umfaßt.
